# EUROPEAN PATENT SPECIFICATION

(11) **EP 1 463 619 B1**
(45) Date of publication and mention of the grant of the patent: **16.01.2008**
(21) Application number: 02757225.4
(22) Date of filing: 19.08.2002
(51) Int. Cl.: B29C 44/02, B29C 51/00

(54) **METHOD FOR PRODUCING SEMICRYSTALLINE POLYLACTIC ACID ARTICLES**
VERFAHREN ZUM HERSTELLEN VON GEGENSTÄNDEN AUS TEILKRISTALLINER POLYMILCHSÄURE
PROCEDE DE PRODUCTION D'ARTICLES EN ACIDE POLYLACTIQUE SEMI-CRISTALLIN

(30) Priority: 20.08.2001 US 313685 P
(43) Date of publication of application: 06.10.2004
(73) Proprietor: Cargill Dow LLC, Minnetonka, MN 55345 (US)
(72) Inventor: BOPP, Richard, C., Golden Valley, MN 55345 (US); WHELAN, Jason, New Hope, MN 55427 (US)
(74) Representative: Plougmann & Vingtoft A/S
(86) International application number: PCT/US2002/026341
(87) International publication number: WO 2003/016015

(56) References cited:
- EP-A- 0 585 747
- EP-A- 0 980 894
- WO-A-01/42367
- DE-A- 19 829 936
- DE-A- 19 829 991
- JP-A- 9 025 345
- US-A- 4 719 246
- US-A- 5 296 229
- US-A- 5 424 346
- US-A- 5 464 878
- US-A- 5 498 650
- US-A- 5 766 748
- US-A- 5 922 832
- US-A- 6 005 068
- US-A- 6 093 791
- US-A- 6 136 905
- US-B1- 6 248 430
- PATENT ABSTRACTS OF JAPAN vol. 1998, no. 06, 30 April 1998 (1998-04-30) & JP 10 036651 A (DAINIPPON INK & CHEM INC), 10 February 1998 (1998-02-10)

## Description

The present invention relates to methods for forming heat-resistant, semicrystalline articles from polylactic acid.

Polylactic acid (PLA) is useful for making films, fibers, and various types of formed articles. One limitation on its use in some food packaging and other applications is its tendency to deform when heated. For example, many food packaging applications require the resin to be subjected to the temperature of boiling water without significant deformation. PLA articles often cannot withstand such temperatures.

PLA tends to exist in an amorphous state when formed into these kinds of articles. Experience with a more conventional resin, poly(ethylene terephthalate) (PET) has shown that better resistance to heat can be obtained if the polymer has a greater amount of crystallinity. For PET, this has resulted in a specialized thermoforming process for inducing crystallinity into PET articles. In cPET thermoforming, a PET sheet is heated until soft enough to be formed, then transferred to a hot mold and formed under vacuum and pressure. The temperature and residence time in the mold are such that crystallites form in the resin. Once the needed crystallinity is obtained, the article is transferred into another mold of identical dimensions. This second mold is held below the glass transition temperature (T_{g}) of the PET resin, usually near room temperature. The colder temperatures "quench" the resin, "locking in" the as-formed dimensions. If the resulting PET resin is sufficiently crystalline, it may withstand use temperatures some 20-150 C higher or more than amorphous PET.

The PET thermoforming process has the drawbacks of requiring two molds, which increases capital investment and operating costs, and long forming times in the mold to allow crystallization to be completed, which reduces output per unit time and thus increases costs.

As mentioned, the cPET thermoforming process is a material-specific one that is designed around the particular characteristics of PET resin.

It has been recognized that PLA, like PET, can be formed into a more crystalline state by subjecting it to certain temperatures. See Kolstad, "Crystallization Kinetics of Poly(L-lactide-co-meso-lactide)", J. Applied Polymer Science 62, 1079-1091 (1996). As described by Kolstad, the rate of crystallization is affected by various factors, including the lactic acid enantiomer ratio, the use of nucleating agents, and the thermal history of the polymer (i.e. time at crystallization temperature and/or cooling rates).

Nonetheless, no cost-effective commercial process has been developed for making formed crystalline PLA articles. It would be desirable to provide such a process, as it would permit PLA to be used in end-use applications that require improved heat resistance.

DE-A-19829991 discloses making formed heat-resistant PLA articles by a method comprising heating a sheet of an amorphous, crystallizable PLA resin until the sheet has obtained a surface temperature of from 80 to abut 155°C, said resin being free of nucleating agents, bringing a mold to a temperature below 80°C and below the T_{g} of the PLA resin, and then drawing or pressure forming the sheet on the mold to form a molded part.

In one aspect, this invention is a method for making formed heat-resistant PLA articles, comprising heating a sheet of an amorphous, crystallizable PLA resin containing a nucleating agent until the sheet has obtained a surface temperature from 80 to 155°C, bringing a mold to a temperature that is below 80°C andbelow the T_{g} ofthe PLA resin, and then drawing or pressure forming the sheet on the mold to form a molded part.

This invention provides a simple, efficient method for making formed articles with improved heat resistance from crystallizable PLA resin. Cycle times as short as about 3 seconds or even less for the forming step can be achieved with this method using commercial-scale equipment. Because only a single mold is necessary, capital expense and operating expenses are minimized. The crystallinity of the PLA resin can be controlled over a wide range by adjusting time and temperature during the heating step, and through control of the composition of the PLA resin itself, as described more below. As certain properties of the PLA resin (notably heat resistance) vary with the crystallinity, this process provides a method whereby easy control over those properties can be obtained. In particular, this invention provides a rapid and inexpensive process for making formed PLA articles that can resist exposure to temperatures of 100°C or more with minimal or no distortion. This permits the articles to be used in a variety of applications, in particular food packaging, in which the article and its contents are to be heated.

In this invention, a semicrystalline sheet of PLA resin is thermoformed on a mold that is at a temperature of 80°C or less. The semicrystalline sheet of PLA resin is obtained by heating a sheet of amorphous PLA resin to a specific temperature range until the desired crystallinity is obtained. The resulting semicrystalline sheet can be immediately thermoformed, or else cooled and later reheated to a thermoforming temperature under conditions that the crystallinity is maintained and then thermoformed.

In the preferred process, the heating step is performed as part of the overall thermoforming process. In the first step of the preferred process, a sheet of amorphous but crystallizable PLA resin is heated. The function of the heating is two-fold-to soften the sheet so that it can be formed in the subsequent step, and to introduce crystallinity into the PLA resin. The conditions of the heating are selected to achieve these purposes.

Softening is performed such that the sheet can be thermoformed under commercially reasonable conditions, without softening the sheet so much that it is too fluid to transfer to the thermoforming mold and be formed into a part.

Crystallinity is introduced such that the sheet develops a crystallinity during the heating step of at least 10 Joules/gram, preferably at least 15 Joules/gram, more preferably at least 20 Joules/gram, even more preferably at least 24 Joules/gram, to 55 Joules/gram, preferably to 45 Joules/gram, even more preferably to 40 Joules/gram.

Crystallizable PLA resins are those that will form crystallites rapidly when a sheet of the resin is heated to a sheet surface temperature range which lies above the T_{g} but below its melting temperature (Tₘ). The temperature range to which the PLA resin must be heated will be a characteristic of the particular PLA resin, and will depend largely on the lactic acid enantiomer ratio and the presence of nucleating agents and/or plasticizers, as described more fully below. In general, however, the temperature at which the requisite crystallization will occur within commercially reasonable time frames is from 80°C to 160°C and is more typically from 90°C to 150°C.

Thus, one method of controlling the process of the invention is to monitor sheet surface temperature. Sheet temperature is generally a suitable process control parameter for sheet thicknesses that are typically used in thermoforming applications, such as up to 6.35 mm (250 mil), preferably 0.254-2.54 mm (10-100 mil), even more preferably 0.381-1.27 mm (15-50 mil), unless extremely rapid heating rates are used. A thicker sheet, or one that is heated very rapidly, may exhibit a significant temperature gradient between the surface and the center. Under these conditions, therefore, surface temperature measurements alone may be less suitable as a process control parameter. For the best results, it is desirable to introduce crystallinity throughout the thickness of the PLA resin, rather than only near the surfaces of the sheet.

It is anticipated that in moat cases, heating conditions will be established empirically with respect to the particular equipment and particular PLA sheet that is used. These empirically derived heating conditions may be developed by establishing suitable and/or optimal temperatures to which a particular PLA resin sheet should be heated, and then relating those temperatures to particular controllable processing conditions such as heating time, line speeds, heater and/or oven temperatures, power to be supplied to heating apparatus, and the like. Alternatively, heating conditions can be empirically derived by measuring the crystallinity of the heated PLA sheet while varying process parameters.

The heating step can be carried out in any convenient manner, such as convection heating, radiant heating (using devices of various types such as visible light, infrared radiation, microwave radiation, and the like), conductive heating (such as by passing the sheet over a heated surface or between heated surfaces such as heated rollers) and induction heating. In order to keep cycle times short, heating is preferably done quickly and uniformly without scorching the sheet or forming significant localized hot spots. The sheet is conveniently held in a clamping frame or other apparatus to give it physical support and to facilitate transfer in and out of the heater and/or to the subsequent forming step.

The heating step may also be performed as part of the process of extruding the sheet. In this variation, the PLA resin is first extruded into sheet form. Because extrusion temperatures are generally higher than the melting temperature (Tₘ), it is necessary to cool the sheet in order to reduce the temperature below Tₘ and into the temperature range at which crystallization occurs. The heating step of this invention can be accomplished by adjusting the temperature of the freshly extruded sheet into the aforementioned temperature ranges, and holding the temperature there until the requisite crystallinity has been developed. The crystallized sheet can then be cooled below the T_{g}, in order to be thermoformed in a separate, later step. In such a case, the sheet will be reheated to the thermoforming temperature (but not to so high a temperature that crystallinity is destroyed) when the thermoforming process is performed. Alternatively, the crystallized sheet may be fed directly into the thermoforming step.

Following the heating step, the PLA sheet is transferred to a mold and thermoformed. The transfer to the mold is performed so that the PLA sheet remains at a temperature suitable for thermoforming until the transfer is complete and the thermoforming accomplished. The mold is at a temperature below 80°C, preferably below the T_{g} of the PLA sheet, more preferably no greater than 50°C, and especially no greater than 35°C. Because of the relatively cold mold temperature, the PLA sheet quickly hardens into the desired shape in the mold. Some additional stress-induced crystallinity may be introduced due to the orientation of the polymer during the thermoforming process, but the amount is generally small.

Thermoforming is accomplished by positioning the softened and crystallized sheet over a male or female mold, and drawing and/or pressure forming the sheet on the mold to form a molded part. The mold is most typically a female mold. Multiple formed parts can be made simultaneously or sequentially from a single sheet. Except for the mold temperature, which is held below the temperatures discussed above, the process of this invention can be conducted using conventional types of thermoforming apparatus, which are adapted if necessary to provide a means to maintain the mold at the requisite temperature. Examples of such apparatus and general methods are described, for example, by Throne in "Thermoforming Crystallizing Poly(ethylene Terephthalate) (CPET)", Advances in Polymer Technology, Vol. 8, 131-146 (1988). Drawing is performed using vacuum, and is the preferred method. The mold may include a male half that is inserted into the female half during the process to provide male mold forming. It may also be desirable to prestretch the sheet; if so a pressure cap or other prestretching device may be used and actuated prior to drawing the sheet into the mold.

The thermoforming step is preferably operated such that thermoforming cycle time (time to complete one thermoforming cycle and get ready to perform the subsequent cycle) is minimized. Thermoforming cycle times are advantageously less than 20 seconds, preferably less than 10 seconds, more preferably no more than 5 seconds, and even more preferably no more than 3 seconds.

Once the part is formed and cooled below its T_{g}, it is demolded and separated from other parts and trimmed if necessary. Various downstream operations, such as applying graphics or labels, assembly to other parts, packaging and the like can be performed if needed, depending on the type of part and its intended use.

By "PLA sheet", it is meant a sheet of a thermoplastic poly(lactic acid) homopolymer or copolymer containing at least 50% by weight (based on the PLA resin) of repeating units derived from lactic acid. The PLA is more preferably a homopolymer of lactic acid. The PLA resin may be blended with small (up to about 50% by weight, based on the weight of the polymers) of another polymer which is not a PLA, but is preferably not such a blend. The preferred PLA resin is a homopolymer of either L-lactic acid or D-lactic acid, a random copolymer of L-lactic acid and D-lactic acid, a block copolymer of L-lactic acid and D-lactic acid, or a mixture of two or more of these. As discussed below, the ratio of the lactic acid enantiomers and the manner in which they are copolymerized (i.e., randomly, block, multiblock, graft and like) greatly influences the ability of the PLA sheet to crystallize in the present process.

The PLA resin can be formed by polymerizing lactic acid or, preferably, by polymerizing lactide. Thus, the term PLA resin is used herein to include polymers made by polymerizing lactide. Lactide is a dimeric form of lactic acid, in which two lactic acid molecules are condensed to form a cyclic diester. Like lactic acid, lactide similarly exists in a variety of enantiomeric forms, i.e., "L-lactide", which is a dimer of two L-lactic acid molecules, "D-lactide", which is a dimer of two D-lactic acid molecules and "meso-lactide", which is a dimer formed from one L-lactic acid molecule and one D-lactic acid molecule. In addition, 50/50 mixtures of L-lactide and D-lactide that have a melting temperature of about 126°C are often referred to as "D.L-lactide". Any of these forms of lactide, or mixtures thereof, can be copolymerized to form a PLA resin for use in this invention. The L/D ratio in the PLA resin is controlled through the ratio of these enantiomeric forms of lactide that are used in the polymerization. In an especially preferred process mixtures of L-lactide and meso-lactide are polymerized to form a polymer having a controlled level of D-lactic acid enantiomeric units. Suitable processes for polymerizing lactide to form PLA having controlled L/D ratios are described, for example, in U. S. Patent No. 5,142,023 and 5,247,059.

The PLA resin may be compounded with various additives and processing aids such as nucleants, other inorganic fillers, plasticizers, reinforcing agents, slip agents, lubricants, UV-stabilizers, thermal stabilizers, flame retardants, foaming agents, antistatic agents, antioxidants, colorants, and the like, with finely divided inorganic solids being of particular importance as discussed more below.

The PLA sheet is amorphous and capable of being crystallized to the extent of 10 Joules/gram through heating at a temperature between its T_{g} and Tₘ. Preferably, it is capable of being crystallized to a crystallinity of at least 15 Joules/gram, more preferably at least 20 Joules/gram, even more preferably at least 24 Joules/gram, especially at least 30 Joules/gram. For purposes of this invention, a PLA sheet is considered "amorphous" if it exhibits a crystallinity of less than 10Joules/g when measured by differential scanning calorimetry (DSC) as described more fully below.

The composition of the PLA sheet is also preferably such that the sheet can be crystallized to the desired extent in a short period. Three important parameters affecting this are the ratio of the lactic acid enantiomers in the PLA resin, the use of nucleating agents and the use of plasticizers.

The ability of PLA to crystallize, all other things being equal, is greatest when only one of the lactic acid enantiomeric forms is present in polymerized form in the polymer. Thus, homopolymers of L-lactic acid or D-lactic acid are the forms of PLA that tend to crystallize most completely and rapidly. In random copolymers of the L- and D-enantiomers, the ability to crystallize falls off rapidly as more of the second enantiomer is present. In this invention, it is preferred to use a PLA resin in which the lactic acid enantiomer ratio is at least 90:10, preferably at least 95:5, more preferably at least 98:2, to 99.9:0.1, more preferably to 99.5:0.5, even more preferably 99:1. It is unimportant in terms of performance whether the predominant isomer is the L- or D- form. PLA resins having predominantly the L- isomer are more readily available commercially, and are preferred for that reason.

The proportion of "D" and "L" lactic acid repeating units in enantiomeric polylactic acid (PLA) copolymers can be accomplished by high performance liquid chromatography. A suitable chromatograph is a Waters LC Module I HPLC with a Sumichiral OA6100 column set and a Model 486 variable wavelength UV detector. Prior to analysis, the PLA enantiomeric copolymer is fully hydrolyzed in a basic aqueous solution into its constituent D- and L-lactic acid monomer units. Enantiomer ratio is conveniently determined by neutralizing the solution with 1N HC1 and injecting it into the HPLC through a 0.45 micron filter. The concentration of the lactic acid enantiomers is determined by comparison of the HPLC results to standard curves generated using pure standards such as are supplied by the Aldrich and Sigma Chemical Companies.

The PLA resin may be compounded with a nucleating agent in order to improve its ability to crystallize quickly. Suitable nucleating agents include finery divided solids that do not react under the conditions of the heating step or the thermoforming process. Particles having a median particle size of less than 5 µm, preferably less than 1µm, are particularly suitable. The most preferred nucleating agent is talc, as it often provides a measure of reinforcement in addition to performing the nucleation function well. Among the suitable commercially available talc products are Ultratalc^{™} 609, available from Specialty Minerals, Inc., and Zemex HTP Ultra SC^{™}, available from Zemex Fabi Benwood LLC. Nucleating agents are used in effective amounts, but if used in too large quantities they can cause the physical properties of the PLA resin to deteriorate. Preferred amounts for most nucleating agents are from 0.1, preferably from 0.5 to 10, preferably to 5, more preferably to 2.5 percent of the combined weight of the PLA resin and the nucleating agent. In the case of talc, it may be desirable to employ larger quantities in order to obtain a desirable reinforcement effect. Thus, preferred usage levels for talc are from 0.5, more preferably from 3, even more preferably from 5 to 40, more preferably to 30 and even more preferably to 20 percent of the combined weight of the PLA resin and the talc.

Nucleating agents are conveniently melt compounded into the PLA resin using any suitable melt compounding equipment, such as single and twin screw extruders, roll mills, Banbury mixers, Farrell continuous mixers and the like. The nucleating agent can also be added during the sheet extrusion process.

Plasticizers also tend to improve the rate at which PLA crystallizes. In general, a suitable plasticizer is one that is compatible with the PLA resin and stable under the conditions of the heating and thermoforming steps. Suitable plasticizers include phthalates (including dioctyl phthalate), citric acid esters, lactic acid esters such as ethyl lactate, lactide esters, mineral oil, triphenyl phosphate, glycerine, acetin and butyrin. Those that are biodegradable are preferred. Suitable amounts of plasticizer are from 0.5 to 30 percent, based on the combined weight of the PLA resin plus the plasticizer. Plasticizers are conveniently melt compounded into the PLA resin or added during the sheet extrusion process as described before.

The ability of a PLA resin to crystallize at a given temperature can be expressed in terms of a crystallization half-time, as described more fully by Kolstad in "Crystallization Kinetics of Poly(L-lactide-co-meso-lactide)", J. Appl. Poly. Sci. 62:1079-1091 (1986). In general, the crystallization half-time is the time required for a PLA resin to achieve one-half of its ultimate extent of crystallization under particular heating conditions. Sheets of PLA resins exhibiting crystallization half-times of less than 10 minutes, preferably less than 3 minutes, and especially less than 1 minute at the temperatures of the heating step are suitable. Sheets of PLA resins that exhibit crystallization half-times of less than 10 seconds may crystallize too rapidly to provide good process control.

The sheet may be a multilayer type, in which at least one layer is a crystallizable PLA resin as described. Other layers may also be of crystallizable PLA resin, an amorphous PLA resin, or may be composed of a different polyme (such as a barrier plastic), provided that the sheet can be thermoformed under the conditions described herein. Multilayer sheets may be formed by, for example, coextrusion or lamination.

The sheet may also be cellular. Cellular sheet can be made by incorporating a foaming agent into the PLA resin during the sheet extrusion process, and extruding the sheet under conditions such that the foam agent generates a gas and expands the sheet when the sheet is extruded. Extrusion foaming processes are well known and applicable here. Cellular sheet is preferably mainly closed celled and has a density as low as 16.02 kg/m³ (one lb/ft³).

A cellular sheet can be formed by foaming it during the softening/crystallization step of this process. In this case, the sheet will contain a foaming agent that generates a gas under the conditions of the heating step. In this manner, the sheet can be simultaneously heated and blown. Suitable blowing agents include lower hydrocarbons, halogenated alkanes such as fluorinated alkanes and perfluorinated alkanes, and water, as well as chemical blowing agents such as citric acid/sodium bicarbonate mixtures, gases such as carbon dioxide and nitrogen, and the like.

Formed articles made according to the invention have improved resistance to heat, compared to PLA articles that are formed with lower crystallinity. Formed PLA articles having a crystallinity of 15 Joules/gram or more have been found to withstand boiling water for several minutes without significant dimensional changes or distortion. As such, the formed articles can be used as containers for hot foods, as microwavable food trays, or in other applications where they are exposed to moderately high temperatures (up to 100°C in many cases, and up to the crystalline melting point of the article for more highly crystalline articles). As PLA resin is hydrolyzable, the length of time for which the article can withstand elevated temperatures will depend on whether, and how much, water is present. In general, the presence of liquid water or increasing humidity tends to shorten this time, as the PLA tends to hydrolyze under those conditions.

The formed articles tend to be opaque to somewhat translucent in appearance, even when a nucleating agent is used. The degree of opacity is generally related to the number and size of the spherulitic crystallites developed in the crystallization step. The opacity can be reduced through more effective crystal nucleation. More effect nucleation is favored by using smaller nucleating particles, in larger numbers. In some instances, the PLA resin may become oriented during the forming process. This may cause some reduction in opacity in the areas in which the orientation occurs.

Among the articles that can be made according to the invention are: beverage cups, other foodware such as trays and plates, including those having attached lids; trays and plates for non-food applications and separate lids or covers for any of the foregoing.

The following examples are provided to illustrate the invention, but are not intended to limit its scope. All parts and percentages are by weight unless otherwise indicated.

### Example 1

### A. Evaluation of Processing Window for Talc-Nucleated PLA sheet.

A single-stage, shuttle-type lab-scale thermoformer without plug assist and a heating oven equipped with an IR radiant heater positioned above and below the sheet is used to evaluate the processing conditions for a nucleated PLA resin sheet. 0.508 mm (20-mil) sheets made from an amorphous, random copolymer of 98.3% L-lactic acid and 1.7% D-lactic acid and containing 10% by weight Ultratalc^{™} 609 (trademark of Specialty Minerals, Inc.) talc are placed for varying, predetermined times in the pre-heated thermoformer oven with the heaters set at 80% power. After the predetermined time in the oven, the sheets are racked out and their surface temperature measured using a Raytek^{™} ST IR surface thermometer. The sheets are then cooled by forcing cool air over their surface. The crystallinity of the cooled sheets is measured by DSC according to the procedure below. In this manner, induced crystallinity is correlated both to oven residence time and to the attained surface temperature, as follows:

**Table 1**

| Time in Oven (s) | Attained Surface Temperature (°C) | Crystallinity (J/g) |
|---|---|---|
| 16 | 111 | 22.1 |
| 20 | 128 | 30.1 |
| 25 | 143 | 31.7 |
| 30 | 151 | 36.4 |
| 40 | 162 | 5.8 |
| 55 | 182 | 6.5 |

The DSC measurements are made using a Mettler Toledo DSC 821e calorimeter running Star V. 6.0 software. Samples are 5-10 milligrams. Heating is performed from 25-225°C at 20°C/minute, under air.

At a heating time of less than 16 seconds under these conditions, the sheet is too rigid to form, even though the measured crystallinity was less than 22 J/g. At 40-55 seconds residence time, the PLA sheet contains less than 10Joules/g crystallinity, indicating that the sheet has reached too high a temperature, thereby destroying the crystallinity. At more than 55 seconds residence time, the sheet is too fluid to form. Within the range of 16 to 30 seconds heating time, the sheet becomes thermoformable and attains the desired crystallinity.

Similar evaluations of 0.508 mm (20 mil) sheets of other PLA resins demonstrate how the process window can vary with the composition of the PLA resin. When a PLA resin containing 1.7% D-isomer and 2.5% Ultratalc 609 is tested, the optimum oven residence time under these conditions is about 18-33 seconds. The attained surface temperature that correlates to 15 J/g or more crystallinity is about 115-155°C. For a 1.2% D-isomer PLA containing 5% UltraTalc 609, the optimum oven residence time under these conditions is about 10-23 seconds and the surface temperature correlating to 15 J/g or more crystallinity is 105-155°C.

### B. Thermoforming of PLA resin sheet on cold mold

Sheets of amorphous PLA resin as described in A above are thermoformed by heating them in the pre-heated thermoformer oven for 15 seconds at 90% power, and then immediately vacuum forming the heated sheets onto a 23°C, single compartment tray mold having dimensions of 3-1/8 X 3-5/8 X 1.5 inches (7.94 X 9.21 X 3.81 cm). The time on the mold is varied in order to determine the minimum cycle time and to assess the effect of in-mold residence time on crystallinity. All parts come off the mold rigid, regardless of in-mold residence time. The results are summarized in Table 2 below.

**Table 2**

| Time on Mold (s) | Overall Cycle Time (s)* | Crystallinity (J/g) |
|---|---|---|
| 4 | 19 | 16.7 |
| 3 | 18 | 16.1 |
| 2 | 17 | 16.4 |

| | | |
|---|---|---|
| * Includes 15 seconds residence time in thermoformer oven. | | |

The data in table 2 demonstrate that thermoformed articles of semicrystalline PLA are easily prepared via the process of the invention. Note that under these conditions, the in-mold residence time has no effect on crystallinity, indicating that all crystallinity is developed in the thermoformer oven during the heating step. This is confirmed by DSC evaluation of a sheet that is taken from the thermoformer oven and rapidly cooled without undergoing the forming step.

### C. Heat Stability of Formed Parts

The heat resistance of the parts made in B above is evaluated by filling the part with water and microwaving at high power for five minutes, or longer if required to bring the water to boiling. All parts retain their shape under this test. By contrast, a similar part having a crystallinity of less than 10 J/g nearly completely loses its shape under this test, flattening almost entirely so that the water it contains at the start of the test is completely spilled.

### Example 2

A 98.8% L/1.2% D PLA resin containing 5% Ultratalc 609 is used in this Example. It is extruded into 16" (40.64 cm) wide, 0.508 mm (20 mil) sheet using a single screw extruder equipped with a general purpose screw, a Maddock mixing head and a 28" (71.12 cm) horizontal cast sheet die. The freshly extruded, substantially amorphous sheet is run through a heated three roll stack, trimmed and wound into rolls.

This sheet is thermoformed on an Irwin Mini Mag 28 in-line thermoformer equipped with a 6" (15.24 cm) soup bowl mold. The machine is operated at 14" (35.56 cm) and 24" (60.96 cm) index lengths. Index length affects oven residence time, with larger indices reducing residence time proportionately, for a given cycle time. The oven is operated at a top oven temperature of between 249°C and 357°C (between 480 and 675°F) and a bottom oven temperature of between 211 and 335°C (between 430 and 635°F) as indicated in Table 3 below. The temperature of the sheet is measured as it leaves the oven just prior to forming, using an IR thermometer. The mold temperature is about 23°C. In-mold residence time is less than 3 seconds. Samples of the sheet trim and the molded bowls are taken in order to measure crystallinity. It is found that the crystallinity of the sheet trim that is not quenched by the mold is not significantly different from that of the corresponding bowls. This confirms that crystallization has occurred in the heating step prior to forming. Results are summarized in Table 3.

**Table 3**

| Index Length, in (cm) | Top Oven Temp., °F (°C) | Bottom Oven Temp., °F (°C) | Attained Sheet Temp. (°C) | Crystallinity (Molded Parts) (J/g) |
|---|---|---|---|---|
| 14 (35.56 cm) | 480 (249) | 430 (211) | 120 | 16.3 |
| 14 (35.56 cm) | 490 (254) | 445 (229) | 133 | 16.5 |
| 14 (35.56 cm) | 500 (260) | 450 (232) | ND | 21.6 |
| 14 (35.56 cm) | 505 (263) | 460 (238) | 140 | 25.7 |
| 14 (35.56 cm) | 510 (266) | 465 (241) | 143 | 26.5 |
| 14 (35.56 cm) | 520 (271) | 475 (246) | 143 | 25.1 |
| 14 (35.56 cm) | 530 (277) | 485 (252) | 149 | 25.9 |
| 24 (60.96 cm) | 635 (335) | 585(307) | 137 | 16.6 |
| 24 (60.96 cm) | 650 (343) | 610 (321) | 146 | 18.3 |
| 24 (60.96 cm) | 675 (357) | 63 (335) | 155 | 14.0 |

## Claims

1. A method for making formed heat-resistant PLA articles, comprising heating a sheet of an amorphous, crystallizable PLA resin containing a nucleating agent until the sheet has obtained a surface temperature from 80 to 155°C, bringing a mold to a temperature that is below 80°C and below the T_{g} of the PLA resin, and then drawing or pressure forming the sheet on the mold to form a molded part.

2. The method of claim 1, wherein the sheet is heated under conditions such that the PLA resin attains a crystallinity of at least 15 Joules/gram.

3. The method of claim 2, wherein the PLA resin is a homopolymer of L-lactic acid or D-lactic acid, a random copolymer of L-lactic acid and D-lactic acid, a block copolymer of L-lactic acid and D-lactic acid or a mixture of two or more of these.

4. The method of claim 3, wherein the PLA resin contains from 1 to 40 percent of finely divided talc, based on the combined weight of the PLA resin and the talc.

5. The method of claim 4, wherein the PLA resin has a crystallization half-life at the temperature to which it is heated during the heating step of less than 3 minutes.

6. The method of claim 4, wherein the sheet is heated under conditions such that the PLA resin attains a crystallinity of at least 20 Joules/gram.

7. The method of claim 6, wherein the sheet is heated under conditions such that the PLA resin attains a crystallinity of at least 24 Joules/gram.

8. The method of claim 8, wherein the PLA sheet contains one or more additives selected from the group consisting of, reinforcing agents, lubricants, UV-stabilizers, thermal stabilizers, flame retardants, foaming agents, antistatic agents, antioxidants and colorants.

9. The method of claim 1, wherein the amorphous PLA sheet is cellular.

10. The method of claim 1 wherein the sheet of an amorphous, crystallizable PLA resin forms a layer of a multilayer structure.

## Patentansprüche

1. Verfahren zur Herstellung geformter, hitzebeständiger PLA-Artikel, umfassend Erhitzen einer Folie eines amorphen, kristallisierbaren PLA-Harzes mit einem kernbildenden Mittel bis die Folie eine Oberflächentemperatur von 80 bis 155°C erreicht hat, Erbringen der Temperatur der Folie auf unter 80°C und unter die T_{g} des PLA-Harzes und dann Streckformung oder Druckformung der Folie auf der Form, um einen geformten Teil zu bilden.

2. Verfahren nach Anspruch 1, worin die Folie unter solchen Umständen erhitzt wird, dass das PLA-Harz eine Kristallinität von mindestens 15 Joule/Gramm erreicht.

3. Verfahren nach Anspruch 2, worin es sich beim PLA-Harz um ein Homopolymer aus L-Milchsäure oder D-Milchsäure, einem zufälligen Copolymer aus L-Milchsäure und D-Milchsäure, einem Block-Copolymer aus L-Milchsäure und D-Milchsäure oder aus einem Gemisch von zwei oder mehreren von diesen handelt.

4. Verfahren nach Anspruch 3, worin das PLA-Harz 1 bis 40 Prozent von fein getrenntem Talkum enthält, basierend auf dem kombinierten Gewicht des PLA-Harzes und des Talkums.

5. Verfahren nach Anspruch 4, worin das PLA-Harz bei der Temperatur, auf die es beim Erhitzungsschritt erhitzt wird, eine Kristallisations-Halbwertszeit von weniger als 3 Minuten aufweist.

6. Verfahren nach Anspruch 4, worin die Folie unter solchen Umständen erhitzt wird, dass das PLA-Harz eine Kristallinität von mindestens 20 Joule/Gramm erreicht.

7. Verfahren nach Anspruch 6, worin die Folie unter solchen Umständen erhitzt wird, dass das PLA-Harz eine Kristallinität von mindestens 24 Joule/Gramm erreicht.

8. Verfahren nach Anspruch 8, worin die PLA-Folie einen oder mehrere Zusatzstoff(e) enthält, ausgewählt aus der Gruppe bestehend aus Verstärkungsmitteln, Gleitmitteln, UV-Stabilisatoren, thermischen Stabilisatoren, flammenhemmenden Mitteln, Treibmitteln, antistatischen Mitteln, Antioxidationsmitteln und Farbstoffen.

9. Verfahren nach Anspruch 1, worin die amorphe PLA-Folie zellulär ist.

10. Verfahren nach Anspruch 1, worin die Folie aus einem amorphen, kristallisierbaren PLA-Harz eine Lage einer mehrlagigen Struktur bildet.

## Revendications

1. Méthode de fabrication d'articles en acide polylactique (PLA) formés thermorésistants consistant à chauffer une feuille de résine PLA amorphe cristallisable contenant un agent nucléant jusqu'à ce que ladite feuille atteigne une température de surface comprise entre 80°C et 155°C, puis à porter un moule à une température inférieure à 80°C et inférieure à la T_{g} de la résine PLA et, enfin, à étirer ou à former sous pression ladite feuille sur le moule de manière à produire une pièce moulée.

2. Méthode de la revendication 1, dans laquelle la feuille est chauffée dans des conditions telles que la résine PLA atteint une cristallinité au moins égale à 15 joules/gramme.

3. Méthode de la revendication 2, dans laquelle la résine PLA est un homopolymère d'acide L-lactique ou d'acide D-lactique, un copolymère statistique d'acide L-lactique et d'acide D-lactique, un copolymère en bloc d'acide L-lactique et d'acide D-lactique ou un mélange de deux ou plusieurs de ceux-ci.

4. Méthode de la revendication 3, dans laquelle la résine PLA contient 1 à 40% de talc fin, sur la base du poids combiné de la résine PLA et du talc.

5. Méthode de la revendication 4, dans laquelle la résine PLA possède une demi-vie de cristallisation inférieure à 3 minutes à la température à laquelle elle est portée pendant l'étape de chauffage.

6. Méthode de la revendication 4, dans laquelle la feuille est chauffée dans des conditions telles que la résine PLA atteint une cristallinité au moins égale à 20 joules/gramme.

7. Méthode de la revendication 6, dans laquelle la feuille est chauffée dans des conditions telles que la résine PLA atteint une cristallinité au moins égale à 24 joules/gramme.

8. Méthode de la revendication 8, dans laquelle la feuille de PLA contient un ou plusieurs additifs choisis dans le groupe suivant : agents de renforcement, lubrifiants, stabilisants UV, stabilisants thermiques, ignifugeants, agents de moussage, agents antistatiques, antioxydants et colorants.

9. Méthode de la revendication 1, dans laquelle la feuille de PLA amorphe est de type alvéolaire.

10. Méthode de la revendication 1, dans laquelle la feuille de résine PLA amorphe cristallisable constitue une couche d'une structure multicouche.
